# EUROPEAN PATENT APPLICATION

(11) **EP 3 396 366 A1**
(43) Date of publication of application: **31.10.2018**
(21) Application number: 16878472.6
(22) Date of filing: 13.12.2016
(51) Int. Cl.: G01N 27/22

(54) **COMPONENT FOR PARTICULATE MATTER MEASUREMENT DEVICE**

(30) Priority: 25.12.2015 JP 2015254148
(71) Applicant: KYOCERA Corporation, Kyoto 612-8501 (JP)
(72) Inventor: MURAMATSU, Hiroki, Kyoto-shi Kyoto 612-8501 (JP); SATO, Masahiro, Kyoto-shi Kyoto 612-8501 (JP); UCHIYAMA, Keigo, Kyoto-shi Kyoto 612-8501 (JP)
(74) Representative: Viering, Jentschura & Partner mbB Patent- und Rechtsanwälte
(86) International application number: PCT/JP2016/087048
(87) International publication number: WO 2017/110581

(57) **Abstract**

A particulate matter measuring device component includes: a base portion formed of ceramics and having a flow channel through which a gas flows; a filter portion formed of porous ceramics and disposed inside the flow channel so as to divide the flow channel into a plurality of divisions; and a pair of electrodes for forming an electrostatic capacitance which is disposed in the base portion so as to sandwich at least a part of the filter portion, the flow channel being located on one end side of the base portion, a retaining portion being disposed on the other end side of the base portion.

## Description

### Technical Field

The present invention relates to a particulate matter measuring device component.

### Background Art

For example, Japanese Unexamined Patent Publication JP-A 2014-159783 (hereinafter, also referred to as Patent Literature 1) discloses a particulate matter measuring device component which is used for measuring an amount of particulate matters in an exhaust gas discharged from a Diesel engine. The particulate matter measuring device component disclosed in Patent Literature 1 includes a filter divided into a plurality of cells by a porous partition wall, and a pair of electrodes disposed to sandwich a cell when setting at least one cell as a measurement cell. The particulate matter measuring device component disclosed in Patent Literature 1 is configured to calculate a deposit amount of particulate matters in an exhaust gas which are trapped in the filter, based on an electrostatic capacitance between the pair of electrodes. Also, since a flow channel of the exhaust gas and the filter are formed over the entirety, they are entirely arranged on the way of an exhaust pipe. The particulate matter measuring device component is retained by a metal fitting, and the metal fitting is fixed outside the exhaust pipe.

### Summary of Invention

A particulate matter measuring device component includes a base portion formed of ceramics and having a flow channel through which a gas flows, a filter portion formed of porous ceramics and disposed inside the flow channel so as to divide the flow channel into a plurality of divisions, and a pair of electrodes for forming an electrostatic capacitance which is disposed in the base portion so as to sandwich at least a part of the filter portion, the flow channel being located on one end side of the base portion, a retaining portion being disposed on the other end side of the base portion.

Another particulate matter measuring device component includes a base portion formed of ceramics and having a flow channel through which a gas flows, a filter portion formed of porous ceramics and disposed inside the flow channel so as to divide the flow channel into a plurality of divisions, and a pair of electrodes for forming an electrostatic capacitance which is disposed in the base portion so as to sandwich at least a part of the filter portion, the base portion having a length direction, when the base portion is bisected in the length direction, the flow channel being on only one bisected side of the base portion.

Still another particulate matter measuring device component includes a pair of base portions which are plate-shaped members formed of ceramics, the pair of base portions being apposed so that main surfaces thereof face each other, a filter portion formed of porous ceramics and disposed so as to divide a space between the pair of base portions to form a flow channel, and a pair of electrodes for forming an electrostatic capacitance which is disposed in each of the pair of base portions so as to sandwich at least a part of the filter portion, the flow channel being located on one end side of the pair of base portions, a retaining portion being disposed on the other end side of the pair of base portions.

### Brief Description of Drawings

FIG. 1 is a perspective view of a particulate matter measuring device component;
FIG. 2 is a sectional view (a longitudinal sectional view) of the particulate matter measuring device component taken along the line A-A shown in FIG. 1;
FIG. 3 is a sectional view (a horizontal sectional view) of the particulate matter measuring device component taken along the line B-B shown in FIG. 1;
FIG. 4 is a schematic view depicting a wiring pattern of an electrode of the particulate matter measuring device component shown in FIG. 1;
FIG. 5 is a schematic view depicting a wiring pattern of an electrode of another example of the particulate matter measuring device component;
FIG. 6 is a schematic view depicting a wiring pattern of an electrode of another example of the particulate matter measuring device component;
FIG. 7 is a schematic view depicting a wiring pattern of an electrode of another example of the particulate matter measuring device component;
FIG. 8 is a perspective view of another example of the particulate matter measuring device component;
FIG. 9 is a horizontal sectional view depicting another example of the particulate matter measuring device component;
FIG. 10 is a longitudinal sectional view depicting another example of the particulate matter measuring device component;
FIG. 11 is a longitudinal sectional view depicting another example of the particulate matter measuring device component;
FIG. 12 is a longitudinal sectional view depicting another example of the particulate matter measuring device component;
FIG. 13 is a perspective view of another example of the particulate matter measuring device component;
FIG. 14(a) is a perspective view of another example of the particulate matter measuring device component, FIG. 14(b) is a sectional view (a longitudinal sectional view) taken along the line C-C of FIG. 14(a), and FIG. 14(c) is a sectional view (a longitudinal sectional view) taken along the line D-D of FIG. 14(a);
FIG. 15 is a schematic view depicting a method of manufacturing the particulate matter measuring device component; and
FIG. 16 is a schematic view depicting another example of a method of manufacturing the particulate matter measuring device component.

### Description of Embodiments

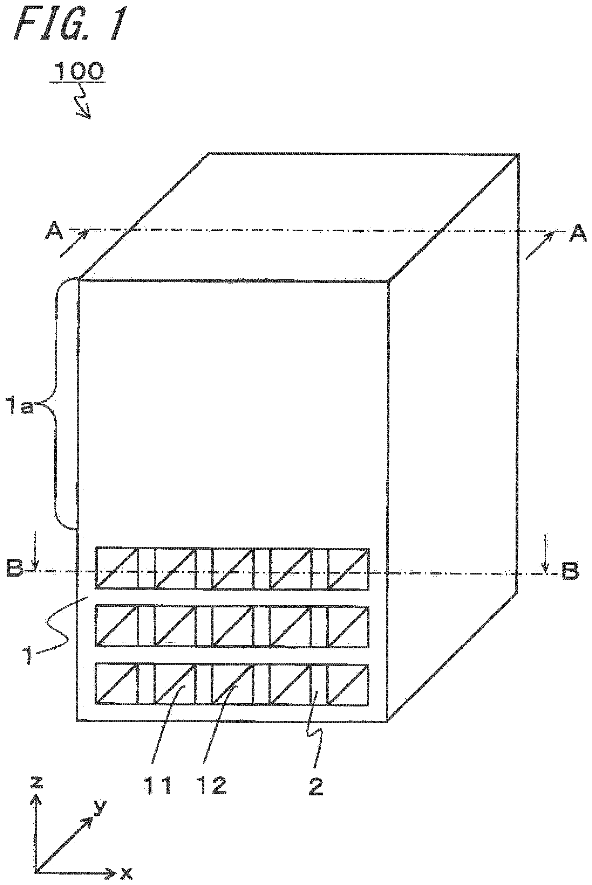

Hereinafter, a particulate matter measuring device component 100 will be described with reference to the drawings. In FIG. 1 and the like, a Cartesian coordinate system xyz fixed and defined with respect to the particulate matter measuring device component 100 is shown. In below descriptions, the directions may be described with reference to the coordinate system. In the particulate matter measuring device component 100, any direction may be a vertical direction or a horizontal direction, and a z-axis direction may also be referred to as the vertical direction or a height direction. Also, the description "when the particulate matter measuring device component 100 is seen from above" indicates "when seen in the z-axis direction".

As shown in FIGS. 1 to 4, the particulate matter measuring device component 100 includes a base portion 1 having flow channels 11 formed therein, and filter portions 2 disposed inside the flow channels 11. The particulate matter measuring device component 100 further includes a pair of electrodes 3 for forming an electrostatic capacitance which is disposed in the base portion 1. The particulate matter measuring device component 100 is used to measure an amount of particulate matters in an exhaust gas discharged from a Diesel engine, for example.

The base portion 1 is a member for forming the flow channel 11 through which a gas flows. The base portion 1 is formed of insulating ceramics such as alumina, for example. The base portion 1 has one or more flow channels 11 formed therein, for example. In the particulate matter measuring device component 100 shown in FIG. 1, the base portion 1 has a cuboid outer shape and is formed therein with the three flow channels 11. The base portion 1 can be set so that a height (a length in the z-axis direction) is 60 mm, a length between side surfaces having openings (a depth, a length in the y-axis direction) is 40 mm, and a length between side surfaces with no openings (a width, a length in the x-axis direction) is 10 mm.

The flow channel 11 extends from one side surface of the base portion 1 to an opposite side surface thereto. The flow channel 11 opens to one side surface of the base portion 1 and to an opposite side surface thereto. The three flow channels 11 are aligned in the height direction of the base portion 1. Each of the flow channels 11 is divided into a plurality of divisions by the filter portion 2, and one divided space is also referred to as the divided flow channel 12. Also, the flow channel 11 (the divided flow channel 12 between the filter portions 2) formed as a result of the division by the filter portion 2 can be set so that a width (a length between the filter portions 2) is 1.2 mm and a height (an interval between a bottom surface and a ceiling surface) is 1.2 mm. The length of the flow channel 11 can be set to 40 mm, which is the same as the length of the base portion 1.

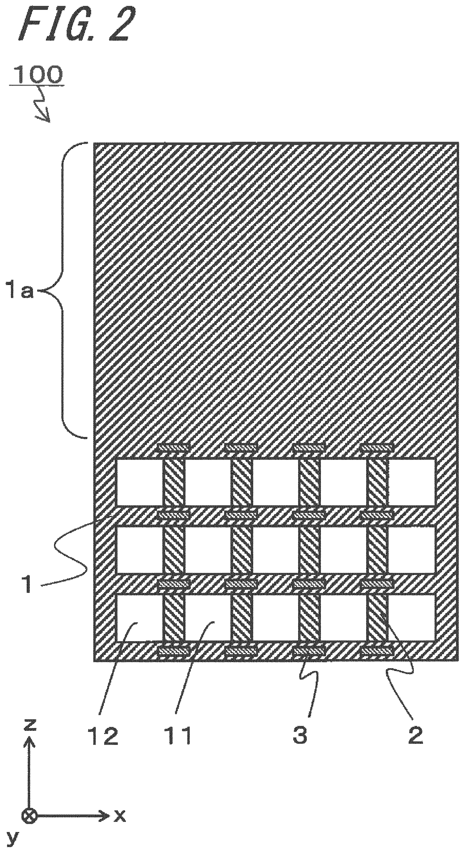

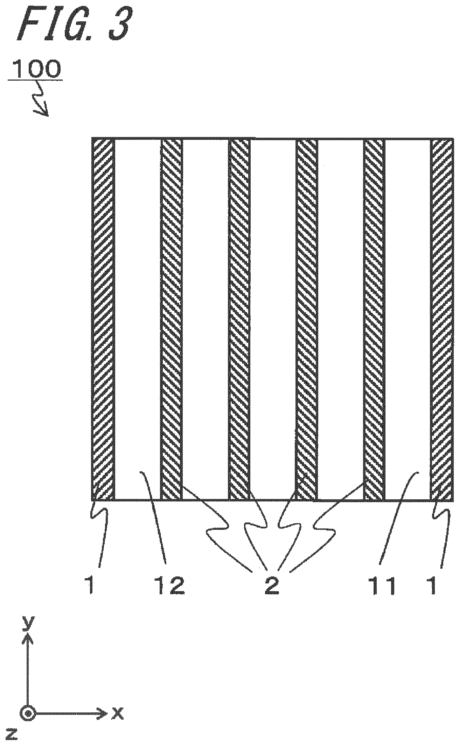

The filter portion 2 is a member for trapping therein particulate matters in the gas. As shown in FIG. 2, the filter portion 2 is disposed inside the flow channel 11. As shown in FIG. 3, in the particulate matter measuring device component 100 of the present disclosure, the filter portion 2 has a plate shape and is disposed so as to extend along the length direction of the flow channel 11. The filter portions 2 are provided so as to divide the flow channel 11 of the base portion 1 into a plurality of regions (the divided flow channels 12). The particulate matter measuring device component 100 of the present disclosure includes the four filter portions 2 for one flow channel 11. The four filter portions 2 are aligned side by side. The filter portion 2 is formed of porous ceramics. As the porous ceramics, porous alumina may be exemplified. When the filter portion 2 is formed of porous alumina, the gas to flow in the flow channel 11 can pass through the filter portion 2. At this time, the filter portion 2 can trap (deposit) part of the particulate matters included in the gas.

Herein, the flow channel 11 is located on one end side of the base portion 1, and a retaining portion 1a is disposed on the other end side of the base portion 1. In other words, the base portion 1 has a height direction (the z-axis direction) perpendicular to the length direction (the y-axis direction) in which the flow channel 11 extends, and when the base portion 1 is bisected in the height direction, the flow channel 11 is on only one bisected side of the base portion 1. In the example of FIG. 1, the flow channel 11 is located on a lower side of the base portion 1 in the height direction (the z-axis direction), and the retaining portion 1a is disposed on an upper side of the base portion 1 in the height direction (the z-axis direction). The retaining portion 1a is a portion for retaining the particulate matter measuring device component 100 with a metal member and the like when fixing the component to an exhaust pipe. By this configuration, it is possible to arrange only one end of the base portion 1 having the flow channels 11 and the filter portions 2 inside the exhaust pipe, and to arrange the retaining portion 1a outside the exhaust pipe. Then, it is possible to retain and fix the other end by a metal fitting or the like outside the exhaust pipe. As a result, since it is possible to reduce thermal stress applied between the metal fitting and (the retaining portion 1a of) the particulate matter measuring device component 100, it is possible to improve reliability of the retaining (mounting) of the particulate matter measuring device component 100, and reliability of electrical connection between the particulate matter measuring device component 100 and an external circuit.

Also, in the particulate matter measuring device component 100 of the present disclosure, a wall surface of the flow channel 11 of the base portion 1 is denser than a surface of the filter portion 2. Thereby, it is possible to make it difficult for the particulate matters to be deposited on the wall surface of the flow channel 11 of the base portion 1 and to easily deposit the particulate matters on the surface of the filter portion 2. As a result, since it is possible to easily deposit the particulate matters on the filter portion 2 in a concentrated manner, it is possible to increase linearity between a deposit amount of the particulate matters and a measured value. As a result, it is possible to improve the measuring precision of the particulate matter measuring device component 100.

The configuration where the wall surface of the flow channel 11 of the base portion 1 is denser than the surface of the filter portion 2 can be checked by a following method, for example. Specifically, the wall surface of the flow channel 11 of the base portion 1 and the surface of the filter portion 2 are observed using a scanning electron microscope (SEM). Then, the obtained SEM images are subjected to image processing, so that porosities of the surfaces are obtained. As a result, it is possible to regard a surface having a less porosity as denser. The porosity of the wall surface of the flow channel 11 of the base portion 1 can be set to 3% or less, for example. The porosity of the surface of the filter portion 2 can be set to 40% to 70%, for example. In the meantime, the wall surface of the flow channel 11 described herein means an entire inner surface of the base portion 1 of the flow channel 11 which base portion faces the gas. That is, the ceiling surface and the bottom surface are included in the wall surface.

When the porosity of the wall surface of the flow channel 11 of the base portion 1 is set to 3% or less, it is possible to make it difficult for the particulate matters to enter the base portion 1. As a result, since it is possible to reduce a concern that the particulate matters are attached to the electrodes 3, it is possible to reduce a concern that the particulate matters will be attached to the electrodes 3 and the electrostatic capacitance between the electrodes 3 cannot be thus correctly measured. As a result, it is possible to further improve the measuring precision of the particulate matter measuring device component 100.

The base portion 1 and the filter portion 2 are formed integrally with each other. When the base portion 1 and the filter portion 2 are formed integrally with each other, it is possible to improve the long-term reliability of the particulate matter measuring device component 100. Specifically, in a case where the base portion 1 and the filter portion 2 are separately formed and are then joined, the peeling may occur from an interface between the base portion 1 and the filter portion 2, for example. In particular, when a bonding material or the like is used for joining, the bonding material is deteriorated, so that the filter portion 2 may not be correctly fixed to the base portion 1. In contrast, when the base portion 1 and the filter portion 2 are formed (fired) integrally with each other, it is possible to reduce the concern that the peeling may occur from the interface between the base portion 1 and the filter portion 2.

In particular, when the base portion 1 and the filter portion 2 are formed of the same ceramics, it is possible to approximate thermal expansion coefficients of the base portion 1 and the filter portion 2. Thereby, it is possible to improve the long-term reliability of the particulate matter measuring device component 100 under heat cycle. Here, the description "formed of the same ceramics" means that the main component (a component occupying 80 mass% or more) of the ceramic constituting the base portion 1 and the filter portion 2 is the same.

In the particulate matter measuring device component 100 of the present disclosure, the base portion 1 and the filter portion 2 are formed of alumina. Alumina can be manufactured at low cost and a porosity of a surface thereof can be easily adjusted, as described below.

The base portion 1 having a surface of which the porosity is 3% or less and the filter portion 2 having a surface of which the porosity is about 40% to 70% can be formed integrally with each other by a following method, for example. Specifically, for a portion which becomes the base portion 1, a ceramic paste including alumina powders of 93 mass% and a resin binder of 7 mass% is used. Also, for a portion which becomes the filter portion 2, a ceramic paste including alumina powders of 55 mass%, a pore-forming material of 38 mass% and a resin binder of 7 mass% is used. The ceramic pastes are processed into green sheets having a predetermined shape by a doctor blade method. At this time, it is possible to form the electrodes 3 for forming an electrostatic capacitance by printing a conductive paste on the green sheet. Then, the green sheets are pressurized and laminated by using a uniaxial press machine. After performing surface processing, as required, the green sheets are fired at 1500°C, so that the filter portion 2 and the base portion 1 having the above-described porosities can be formed.

Sizes of the filter portion 2 can be set so that a length in a width direction of the base portion 1 is 0.3 mm, a length in a thickness direction of the base portion 1 is 1.2 mm, which is the same as the interval between the bottom surface and ceiling surface of the flow channel 11, and a length in the length direction of the base portion 1 is 40 mm.

The electrode 3 is a member for forming an electrostatic capacitance. As shown in FIG. 2, a pair of the electrodes 3 is disposed in the base portion 1 so as to sandwich the filter portion 2. More specifically, when the plurality of flow channels 11 are provided, like the particulate matter measuring device component 100 of the present disclosure, the electrodes 3 are disposed so as to sandwich the filter portion 2 positioned in each flow channel 11. The electrodes 3 may be disposed to span and cover a plurality of filter portions 2 or may be disposed to correspond to the filter portions 2 one by one, for example. As shown in FIG. 2, when the three flow channels 11 are located in the vertical direction, like the particulate matter measuring device component 100 of the present disclosure, the electrodes 3 may be positioned above the upper flow channel 11, between the upper flow channel 11 and the midmost flow channel 11, between the midmost flow channel 11 and the lower flow channel 11, and below the lower flow channel 11. The electrode 3 positioned between the upper flow channel 11 and the midmost flow channel 11 can form the electrostatic capacitance between the corresponding electrode and the electrode 3 positioned above the upper flow channel 11 and can also form the electrostatic capacitance between the corresponding electrode and the electrode 3 positioned between the midmost flow channel 11 and the lower flow channel 11. Also, the electrode 3 positioned between the midmost flow channel 11 and the lower flow channel 11 can form the electrostatic capacitance between the electrode and the electrode 3 positioned below the lower flow channel 11, as well.

The electrostatic capacitance is formed between the pair of electrodes 3 disposed so as to sandwich the filter portion 2. When the particulate matters are trapped in the filter portion 2, the electrostatic capacitance between the pair of electrodes 3 changes. When the change in the electrostatic capacitance is detected by an external detection device, a deposit amount of the particulate matters trapped in the filter portion 2 can be measured.

In the particulate matter measuring device component 100 of the present disclosure, the electrode 3 is embedded in the base portion 1. Thereby, it is possible to reduce a concern that the electrode 3 will be corroded due to the gas. Also, since it is possible to reduce a concern that the particulate matters and the like will be attached to a surface of the electrode 3, it is possible to improve the measuring precision of the particulate matter measuring device component 100. Meanwhile, in the particulate matter measuring device component 100 of the present disclosure, the electrode 3 is disposed (embedded) in the base portion 1. However, the invention is not limited thereto. Specifically, the electrode 3 may be disposed on an outer surface of the base portion 1 (a surface except the wall surface of the flow channel 11), for example.

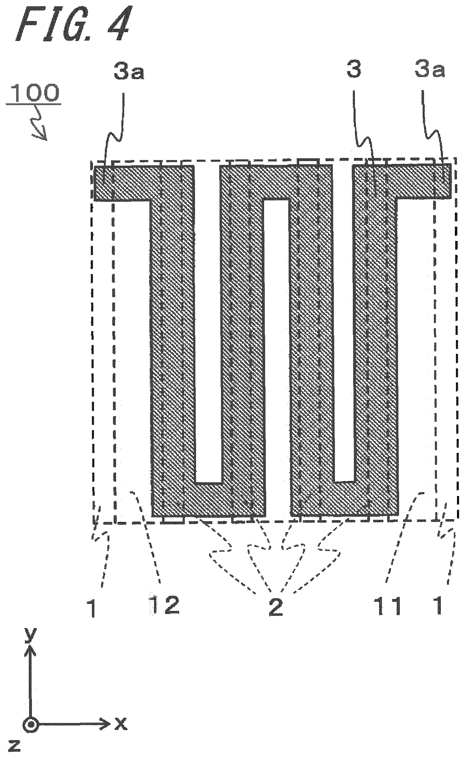

As shown in FIG. 4, in the particulate matter measuring device component 100 of the present disclosure, the electrode 3 has a linear wiring pattern, for example, and is disposed so as to extend along the filter portion 2. In this way, when the electrode 3 is disposed so as to extend along the filter portion 2, it is possible to improve linearity between the amount of the particulate matters trapped in the filter portion 2 and the change in electrostatic capacitance between the electrodes 3. The reason is that it is possible to reduce the change in electrostatic capacitance due to the particulate matters attached to a portion of the component (for example, the wall surface of the flow channel 11) except the filter portion 2 by disposing the electrode 3 so as to extend along the filter portion 2. In the meantime, the shape of the electrode 3 as seen from above is not limited to the linear shape, and may be a circular shape or a rectangular shape, for example.

Also, when the electrode 3 is formed into the linear wiring pattern, it is possible to increase a resistance value, as compared to a configuration where the electrode 3 is formed to have a circular shape or a rectangular shape. For this reason, the electrode 3 can be enabled to function as a heater by applying a high voltage to the electrode. Thereby, it is possible to remove the particulate matters trapped in the filter portion 2 by heating.

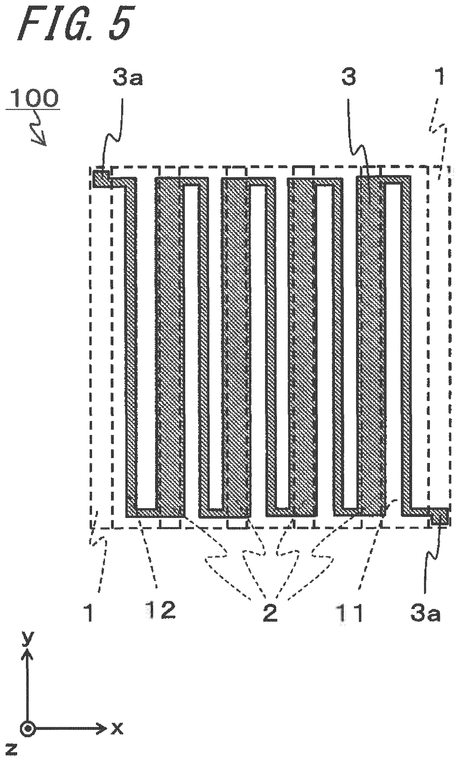

In particular, like an example shown in FIG. 5, the electrode 3 has a linear wiring pattern and is disposed in a region, in which the filter portion 2 is sandwiched, of the base portion 1 and in a region, in which the filter portion 2 is not sandwiched, and as seen from above, a portion of the electrode 3 which portion is positioned in the region in which the filter portion 2 is not sandwiched may be formed to be narrower than a portion which is positioned in the region in which the filter portion 2 is sandwiched. Thereby, while securing a width of the portion of the electrode 3 which portion is positioned in the region in which the filter portion 2 is sandwiched to favorably form the electrostatic capacitance between the electrodes, it is possible to narrow a width of the portion of the electrode 3 which portion is positioned in the region in which the filter portion 2 is not sandwiched, thereby increasing the resistance value. Thereby, it is possible to enable the electrode 3 to effectively function as the electrode for forming the electrostatic capacitance and to effectively function as a heater.

In the examples of FIGS. 4 and 5, an end of the electrode 3 has a leading portion 3a drawn out to the base portion 1 which is positioned outside the flow channel 11 in the width direction (the x-axis direction) of the base portion 1. A through-conductor (not shown) electrically connected by the leading portion 3a and drawn out to an upper surface of the base portion 1 through the base portion 1 is provided. The upper surface of the base portion 1 is provided with a terminal electrode (not shown) which is electrically connected to the through-conductor. The terminal electrode and the external detection device can be electrically connected.

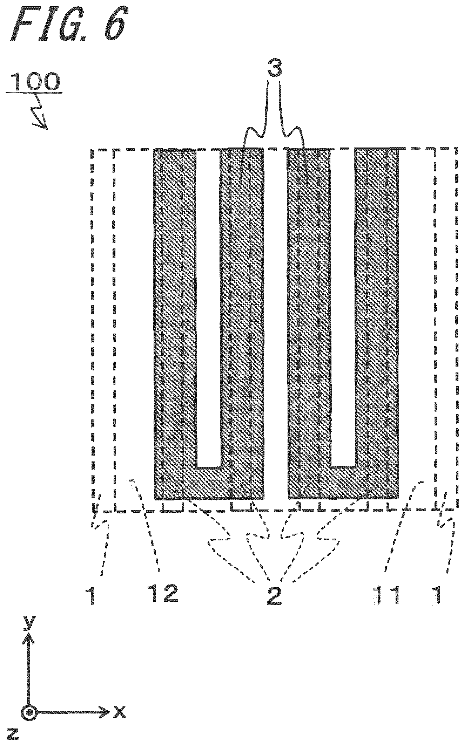

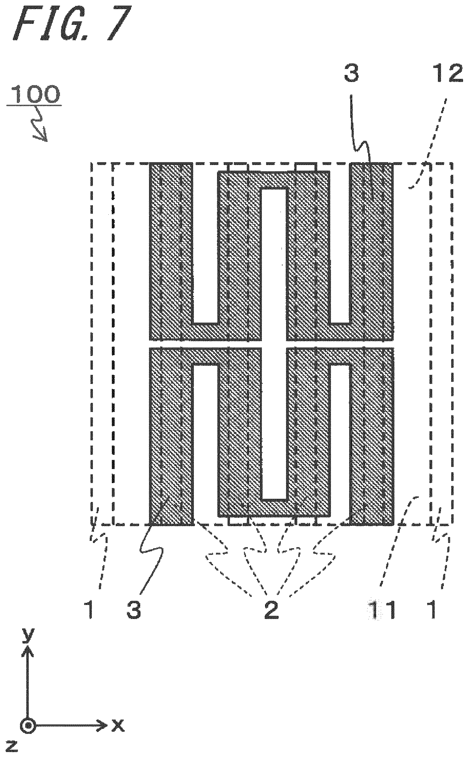

In the examples of FIGS. 4 and 5, each of the pair of electrodes 3 disposed so as to sandwich the filter portion 2 has one linear wiring pattern having a meander shape where ends of portions disposed so as to extend along each of the plurality of filter portions 2 are connected in a serpentine shape. An end of one electrode is drawn to the outer surface of the base portion 1, and each of the pair of electrodes 3 is configured as one-system wiring. In contrast, in examples of FIGS. 6 and 7, each of the pair of electrodes 3 has a linear wiring pattern having two meander shapes, and is configured as a two-system wiring. In the example of FIG. 6, the two wiring patterns are arranged side by side in the width direction (the x-axis direction) of the flow channel 11, and in the example of FIG. 7, the two wiring patterns are arranged side by side in the length direction (the y-axis direction) of the flow channel 11. Meanwhile, in FIGS. 6 and 7, the leading portion 3a is omitted.

In this way, when each of the pair of electrodes 3 arranged to sandwich the filter portion 2 is configured as the two-system wiring, it is possible to detect the particulate matters by the electrode 3 of one system and to remove the trapped particulate matters by the electrode 3 of the other system. For this reason, it is possible to continuously detect the particulate matters without stopping the detection of the particulate matters so as to remove the particulate matters. In the examples of FIGS. 6 and 7, each of the pair of electrodes 3 arranged to sandwich the filter portion 2 is configured as the two-system wiring. However, since a plurality of systems have only to be provided, the wirings of three or more systems are also possible.

For the electrode 3, a metal material such as platinum, tungsten and the like may be used. Also, when the electrode 3 is formed to have a linear wiring pattern, a width may be set to 2 mm, a length may be set to 38 mm, and a thickness may be set to 30 µm, for example.

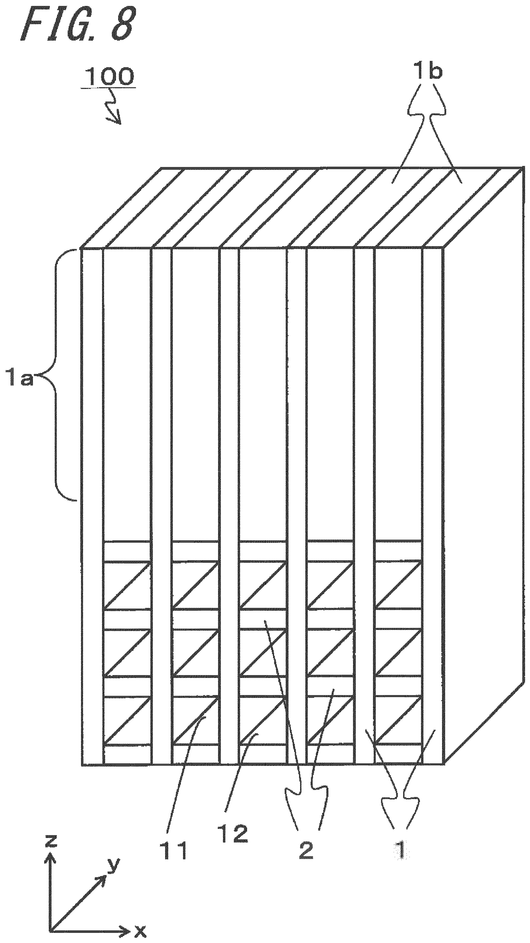

In the particulate matter measuring device component 100 of the present disclosure, the base portion 1 has therein the flow channel 11. However, the invention is not limited thereto. Specifically, for example, as shown in FIG. 8, the component may include a pair of base portions 1 which are plate-shaped members formed of ceramics and apposed so that main surfaces thereof face each other, filter portions 2 formed of porous ceramics and disposed so as to divide a space between the pair of base portions 2 to form flow channels, and a pair of electrodes 3 for forming an electrostatic capacitance which is disposed in each of the pair of base portions so as to sandwich the filter portions 2, wherein the flow channels 11 are located on one end side of the pair of base portions 1 and a retaining portion 1a is disposed on the other end side of the pair of base portions 1.

In the particulate matter measuring device component 100 of the present disclosure, the space between the base portion 1 and the base portion 1 is divided by the filter portions 2, so that the flow channels 11 (the divided flow channels 12) are formed. The gas is enabled to flow into the flow channel 11, so that it is possible to trap the particulate matters with the filter portions 2, and to measure the amount of the particulate matters by detecting a change in electrostatic capacitance between the electrodes 3. Also in the particulate matter measuring device component 100, it is possible to improve the measuring precision, like the above-described particulate matter measuring device component 100.

More specifically, in the particulate matter measuring device component 100 shown in FIG. 8, the six base portions 1 are provided with the five spaces, each of which is formed between the respective base portions, with being spaced side by side in the horizontal direction (the x-axis direction), and the four filter portions 2 are disposed in each of the five spaces. The number of the base portions 1 may be two to five, or seven or more. Also, the number of the filter portions 2 may be appropriately changed.

The filter portions 2 are disposed in a space which is positioned on one end side of the base portions 1, of the space between the pair of base portions 1, so that the flow channels 11 are formed biasedly on one end side of the base portions 1. The retaining portion 1a is disposed on the other end side of the base portions 1. That is, like the disclosure shown in FIG. 1, the flow channels 11 are located on the lower sides of the base portions 1 in the height direction (the z-axis direction), and the retaining portion 1a is disposed on the upper sides of the base portions 1 in the height direction (the z-axis direction). Also, like the preceding disclosure, the retaining portion 1a is a portion for retaining the particulate matter measuring device component 100 with a metal member and the like when fixing the component to an exhaust pipe. Therefore, like the preceding disclosure, it is possible to arrange only one ends of the base portions 1 having the flow channels 11 and the filter portions 2 inside the exhaust pipe, and to arrange the retaining portion 1a outside the exhaust pipe. Then, it is possible to retain and fix the other ends by a metal fitting or the like outside the exhaust pipe. As a result, since it is possible to reduce thermal stress applied between the metal fitting and (the retaining portion 1a of) the particulate matter measuring device component 100, it is possible to improve the reliability of the retaining (mounting) of the particulate matter measuring device component 100, and the reliability of the electrical connection between the particulate matter measuring device component 100 and an external circuit.

In the example of FIG. 8, a second base portion 1b formed of ceramics similar to the base portion 1 is arranged in a space which is positioned on the other end side of the base portion 1, of the space between the pair of base portions 1. The pair of base portions 1 and the second base portion 1b disposed therebetween are formed integrally with each other. According to this configuration, since the retaining portion 1a is formed of densified ceramics, it is possible to increase the strength of the retaining portion 1a, to which the metal fitting is mounted, and to retain the component with a higher force by the metal fitting. Also, it is possible to suppress the exhaust gas introduced into the flow channel 11 positioned on one end side from being leaked through the other end to the outside of the exhaust pipe by the second base portion 1b.

Instead of the second base portion 1b, a filter portion 2 which is positioned most closely to the other end of the base portion 1, of the filter portions 2 may be configured to extend to the other end. However, it is more effective to arrange the second base portion 1b formed of the densified ceramics similar to the base portion 1.

Also, in the example of FIG. 8, the second base portion 1b is arranged so as to be in contact with the filter portion 2 which is positioned most closely to the other end of the base portion 1, of the filter portions 2. However, a space may be formed between the filter portion 2 positioned most closely to the other end and the other end, and the second base portion 1b may be arranged therein.

In the particulate matter measuring device component 100 shown in FIG. 8, the filter portion 2 constitutes a portion of a lower wall. However, the base portion 1 which is in contact with the lower filter portion 2 may be disposed below the lower filter portion 2, as the lower wall. In this way, since it is possible to improve the stiffness of the particulate matter measuring device component 100 and to reduce an exposed area of the filter portion 2 having relatively low strength, it is possible to suppress deformation due to the thermal stress and a damage due to an external force and to thus secure the high reliability. Also, all the wall surfaces in contact with the flow channel 11 are the filter portions 2, so that the trapping efficiency is increased and the sensitivity is improved.

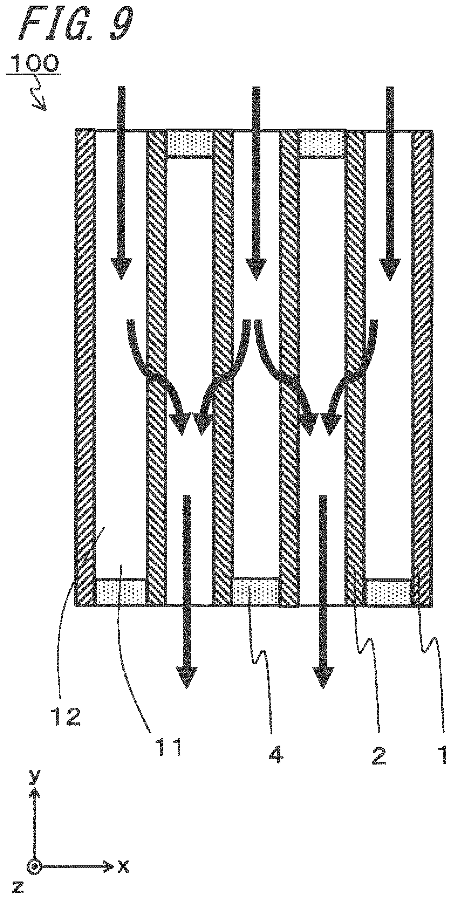

Also, in the particulate matter measuring device component 100 of FIG. 1, the end portions of the flow channels 11 are opened. However, the invention is not limited thereto. For example, like an example of FIG. 9, the end portions of the flow channels 11 may be partially sealed by sealing portions 4. In particular, one end of the flow channel 11 may be partially opened and a portion of the other end which portion faces the opened one end may be sealed, and one end of the flow channel 11 may be partially sealed, and a portion of the other end which portion faces the sealed one end may be opened.

Thereby, since the gas to flow inside the flow channel 11 can easily pass through the filter portion 2, it is easy to trap the particulate matters with the filter portion 2. As a result, it is possible to improve the measurement precision of the particulate matter measuring device component 100. Meanwhile, in FIG. 9, the flow of the gas is denoted with the arrow.

Also, for the sealing portion 4, a resin material such as fluorine-contained resin, for example, may be used. In addition, the sealing portion 4 may be formed of the same ceramics as the filter portion 2 or the base portion 1. Thereby, since it is possible to reduce a difference of thermal expansions of the filter portion 2 or base portion 1 and the sealing portion 4, it is possible to improve the long-term reliability under heat cycle.

Also, the filter portion 2 may be formed of the ceramics and may be formed (fired) integrally with the base portion 1 and the sealing portion 4. Thereby, it is possible to reduce a concern that the deterioration will be caused from an interface between the sealing portion 4 and the base portion 1 or between the sealing portion 4 and the filter portion 2.

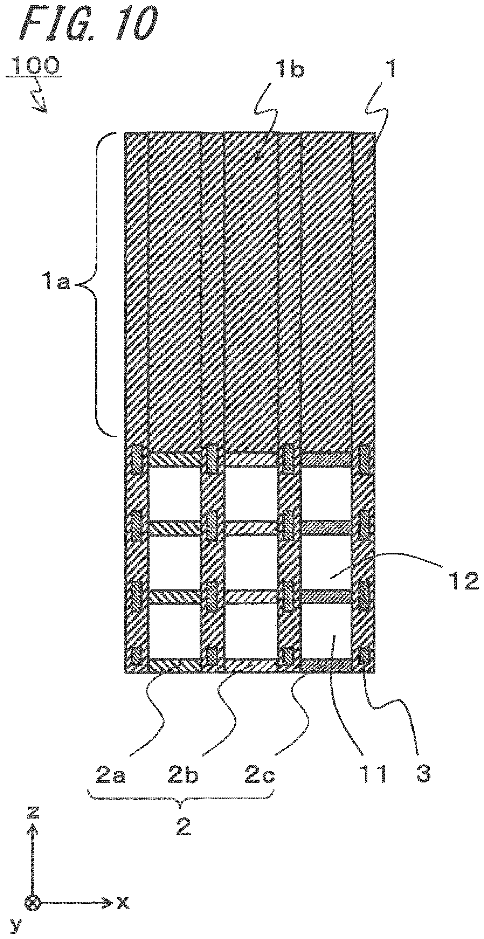

The particulate matter measuring device component 100 of FIGS. 10 to 12 includes a plurality of filter portions 2 having different porous degrees from each other. Thus, this allows the particulate matter measuring device component 100 to have higher added value, such as the particulate matter measuring device component 100 capable of perceiving a distribution of particle sizes of the particulate matters and the particulate matter measuring device component 100 capable of continuously trapping the particulate matters for a long time and having a long lifetime.

Specifically, in the example of FIG. 10, the filter portions 2 have three types of filter portions 2a, 2b and 2c formed of porous ceramics and having different pore sizes and pore diameters. In the example of FIG. 10, a first filter portion 2a having a relatively large pore diameter, a third filter portion 2c having a relatively small pore diameter, and a second filter portion 2b having an intermediate pore diameter are provided.

Since the plurality of filter portions 2a, 2b and 2c having the different pore diameters is provided, the particulate matters trapped by the respective filter portions 2a, 2b and 2c have different average particle sizes. For this reason, it is possible to perceive a distribution of particle sizes of the trapped particulate matters from the electrostatic capacitance detected by the electrodes 3 arranged to sandwich each of the plurality of filter portions 2a, 2b and 2c having the different pore diameters, so that it is possible to guess a combustion state of an engine configured to discharge the exhaust gas containing the particulate matters and a state of the PM filter positioned upstream of the particulate matter measuring device component 100, for example.

Also, in the example of FIG. 10, the plurality of filter portions 2a, 2b and 2c having the different pore diameters is aligned in order of the magnitudes of the pore diameters. Specifically, in the example of FIG. 10, three rows of spaces (the flow channels 11) are aligned in the right and left direction of FIG. 10 (the x-axis direction), where the first filter portion 2a is arranged in the left row, the second filter portion 2b is arranged in the center row, and the third filter portion 2c is arranged in the right row. That is, in each row, the filter portions 2 having the same pore diameter are arranged side by side in the vertical direction (the z-axis direction). According to this arrangement, it is possible to arrange the electrodes 3 side by side configured to sandwich the filter portions 2 having the same pore diameter, and to integrate the electrodes into one, like the example of FIG. 4.

The type of the magnitude of the pore diameter of the filter portion 2 is not limited to the three types, and may be two types, or four or more types. Also, in the example of FIG. 10, the filter portions 2 having the same pore diameter are aligned side by side in the vertical direction (the z-axis direction) but may be aligned side by side in the horizontal direction (the x-axis direction). Although the filter portions may be randomly aligned, the filter portions are preferably aligned side by side, as described above,

In the meantime, the pore diameter is an average pore diameter. The pore diameter may be obtained by capturing a SEM image of a surface or a section of the filter portion 2 and calculating an average pore diameter of pores in a range of the SEM image through image analysis. the SEM image in a view field of 1.0 mm × 1.3 mm at 100-fold magnification of the SEM may be used.

When the pore diameter of the filter portion 2 is 1 µm to 60 µm and the filter portion 2 has three types of the filter portions 2a, 2b and 2c having different pore diameters, like the above example, the pore diameter of the first filter portion 2a may be 10 µm to 60 µm, the pore diameter of the second filter portion 2b may be 5 µm to 30 µm, and the pore diameter of the third filter portion 2c may be 1 µm to 15 µm, for example.

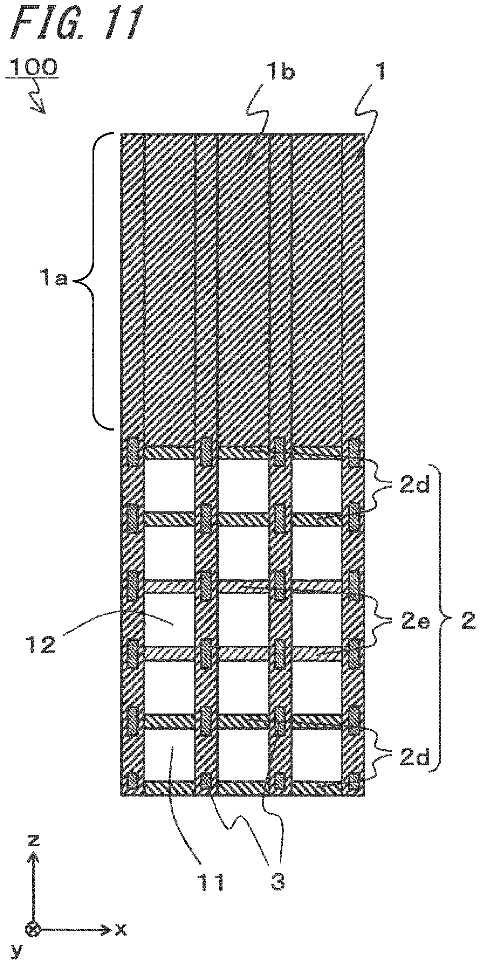

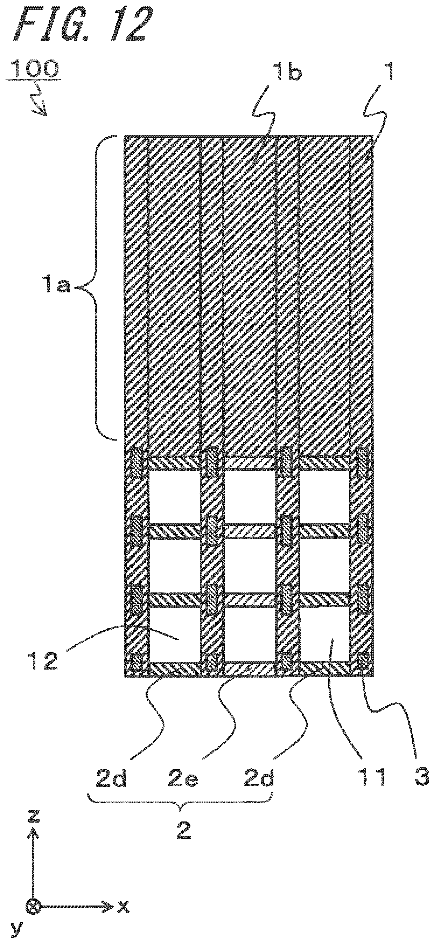

Also, in the examples of FIGS. 11 and 12, the filter portion 2 formed of porous ceramics has two types of filter portions 2d and 2e having different porosities. In the examples of FIGS. 11 and 12, a fourth filter portion 2d having a relatively large porosity and a fifth filter portion 2e having a relatively small porosity are provided. When seen in a cross sectional view perpendicular to the length direction of the flow channel 11, the porosity of the filter portion 2 positioned at an outer side is larger than the porosity of the filter portion 2 positioned at an inner side. When seen in the cross sectional view perpendicular to the length direction of the flow channel 11, the fourth filter portion 2d is arranged at the outer side, and the fifth filter portion 2e is arranged at the inner side.

In the meantime, the description "positioned at the outer side" may indicate an outer side in the vertical direction, as shown in FIG. 11. Also, the description "positioned at the outer side" may indicate an outer side in the width direction of a flow channel 11, as shown in FIG. 12. Also, the description "positioned at the outer side" may indicate an outer side both in the vertical direction and in the width direction.

In the example of FIG. 11, the fourth filter portions 2d are arranged at an outer side in the vertical direction (the z-axis direction), and the fifth filter portions 2e are arranged at an inner side. The three rows of spaces (the flow channels 11) are aligned in the right and left direction of FIG. 11 (the x-axis direction), where the six filter portions 2 are aligned in the vertical direction (the z-axis direction) in each space (the flow channel 11). The two upper filter portions and two lower filter portions in each space are the fourth filter portions 2d, and the two central filter portions in each space are the fifth filter portions 2e. In the example of FIG. 12, the fourth filter portions 2d are arranged at the outer sides in the right and left direction of FIG. 12 (the x-axis direction), and the fifth filter portion 2e is arranged at the inner side. The three rows of spaces (the flow channels 11) are aligned in the right and left direction (the x-axis direction), where the four filter portions 2 are aligned in the vertical direction (the z-axis direction) in each space (the flow channel 11). The four filter portions positioned in each of the right and left spaces of the three spaces are the fourth filter portions 2d, and the four filter portions positioned in the central space are the fifth filter portions 2e.

When the gas containing the particulate matters flows in the spaces (the flow channels 11) in the particulate matter measuring device component 100, a flow rate of the gas flowing through a central portion of the space (an inner region in the cross sectional view perpendicular to the length direction of the flow channel 11) tends to be greater than a flow rate of the gas flowing through an outer peripheral portion of the space (an outer region in the cross sectional view perpendicular to the length direction of the flow channel 11). For this reason, the filter portion 2 arranged at the inner side traps the more particulate matters than the filter portion 2 positioned at the outer side, so that the clogging of the particulate matters occurs earlier. When the clogging of the particulate matters occurs earlier, a regeneration frequency of removing the particulate matters by heater heating increases, so that the particulate matter measuring device component 100 is also deteriorated earlier. In contrast, as described above, when the porosity of the filter portion 2 (the fourth filter portion 2d) positioned at the outer side in the cross sectional view perpendicular to the length direction of the flow channel 11 is greater than the porosity of the filter portion 2 (the fifth filter portion 2e) positioned at the inner side, the gas is more likely to flow toward the filter portion 2 (the fourth filter portion 2d) having the larger porosity, so that a difference of the gas flow rates depending on the positions in the cross sectional view perpendicular to the length direction of the flow channel 11 is reduced. For this reason, since only the filter portion 2 positioned at the inner side is not earlier clogged by the particulate matters, it is possible to provide the particulate matter measuring device component 100 capable of continuously trapping the particulate matters for a long time and having long lifetime.

In FIGS. 11 and 12, the porosity of each of the filter portions 2 (the fourth filter portions 2d) positioned at the outer side in the vertical direction and at the outer side in the right and left direction is greater than the porosity of the filter portion 2 (the fifth filter portion 2e) positioned at the inner side. Further, these filter portions may be combined, and the porosities of the filter portions 2 positioned at the outer sides in the vertical direction and the right and left direction and positioned at the outer periphery portion in the section may be greater than the porosities of the filter portions 2 positioned at the inner sides in the vertical direction and the right and left direction and positioned at the central portion in the section. When the base portions 1 and the filter portions 2 are alternately arranged in the right and left direction (the x-axis direction), the structure as shown in FIG. 12 where the fourth filter portions 2d are arranged at the outer side in the right and left direction (the x-axis direction) and the fifth filter portion 2e is arranged at the inner side is preferable because it can be easily manufactured by a manufacturing method as described later.

As the measurement method of the porosity for comparing the porosities of the filter portions 2, for example, a mercury intrusion technique (JIS standard R1655:2003), an image analysis of a SEM image, and the like may be exemplified. The image analysis of a SEM image can be performed by capturing a SEM image of a section of the filter portion 2 and calculating an arear ratio of pores in a range of the SEM image through the image analysis. For example, the SEM image in a view field of 1.0 mm × 1.3 mm at 100-fold magnification of the SEM may be used.

When the porosity of the filter portion 2 is 40 to 70%, the porosities of the filter portion 2d having a relatively large porosity and the filter portion 2e having a relatively small porosity may be set to 50 to 70% and 40 to 60%, respectively.

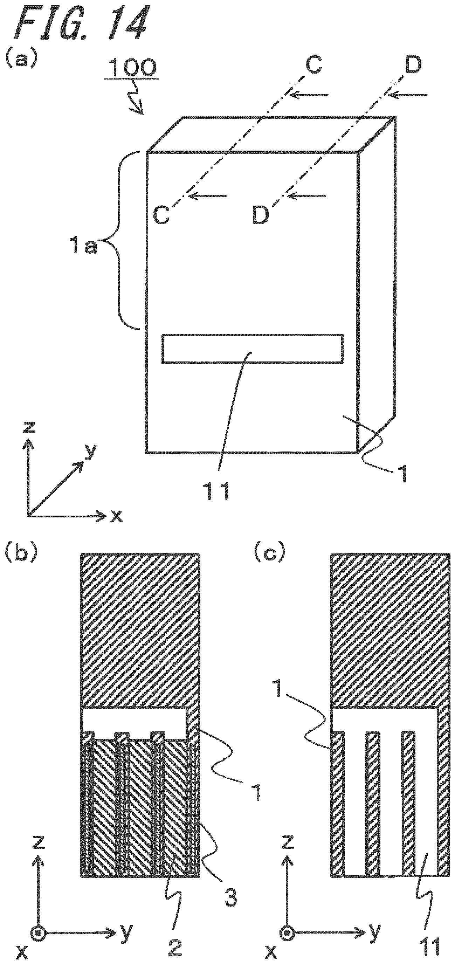

In the above-described particulate matter measuring device component 100, the flow channel 11 extends from one side surface of the base portion 1 to a side surface located opposite thereto. However, the invention is not limited thereto. For example, like an example of FIG. 14, the flow channel 11 may be configured so that one end thereof opens on one side surface of the base portion 1 and the other end opens on a surface (a lower surface) located at the one end of the base portion 1. Alternatively, the flow channel may open on two opposed side surfaces of the base portion 1 and a surface (a lower surface) located at one end of the base portion 1.

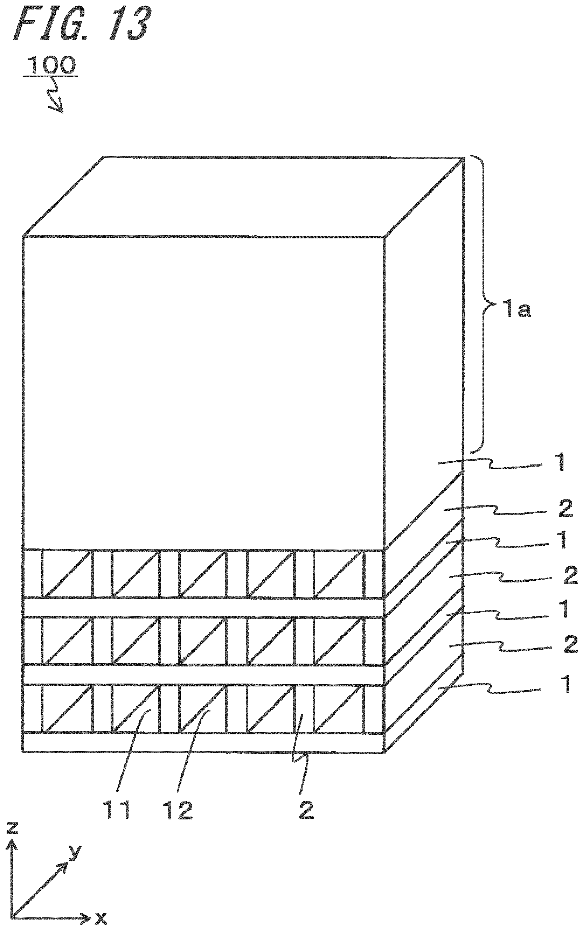

Also, regarding an example of the particulate matter measuring device component 100 including the pair of base portions 1 apposed so that the main surfaces face each other, and the filter portions 2 disposed so as to divide the space between the pair of base portions 1 to form the flow channel 11, the example of FIG. 8 is an example where the base portions 1 and the filter portions 2 are alternately arranged in the horizontal direction (the x-axis direction). However, as shown in FIG. 13, the base portions 1 and the filter portions 2 may be alternately arranged in the vertical direction (the z-axis direction). At this time, the retaining portion 1a does not have the second base portion 1b. A thickness of the outermost (uppermost) base portion 1 is thick, and the corresponding base portion serves as the retaining portion 1a. This is similar to a configuration where the portion positioned at the outer side of the flow channel 11 of the base portion 1 and the outer wall of the flow channel 11, which is shown in the example of FIG. 1, are replaced with the filter portion 2.

A manufacturing method of the particulate matter measuring device component 100 having the dense base portion 1 formed of ceramics and the filter portion 2 formed of porous ceramics, which are formed integrally with each other, includes a process of preparing a plurality of first ceramic green sheets 12, a process of preparing a plurality of second ceramic green sheets 22, a process of forming an electrode layer 32 on the first ceramic green sheet 12, a process of forming through-holes 112 in the second ceramic green sheets 22, a process of laminating the first ceramic green sheets 12 having the electrode layer 32 formed thereon and the second ceramic green sheets 22 having the through-holes 112 formed therein to form a laminated body 102, and a process of firing the laminated body 102.

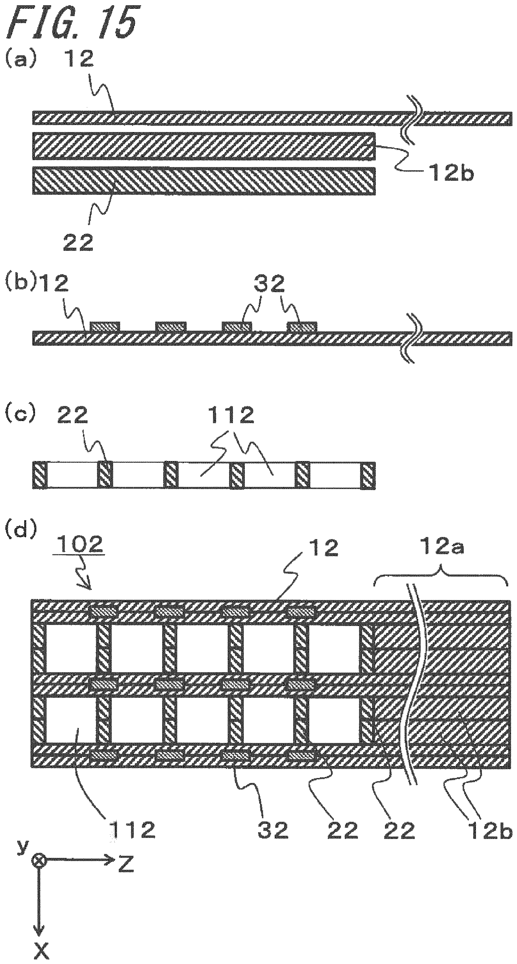

FIG. 15 is a schematic view depicting a manufacturing method of a particulate matter measuring device component, in each process. FIG. 15 depicts manufacturing processes of the particulate matter measuring device component 100 in which three base portions 1 are prepared instead of six base portions shown in FIG. 8 and six filter portions 2, each of which is arranged between the pair of base portions 1, are prepared instead of four filter portions shown in FIG. 8. First, as shown in FIG. 15(a), a plurality of first ceramic green sheets 12, a plurality of second ceramic green sheets 22 and a third ceramic green sheet 12b are prepared. The first ceramic green sheet 12 will be sintered in the subsequent firing process and become the base portion 1, the second ceramic green sheets 22 will be the filter portions 2, and the third ceramic green sheet 12b will be the second base portion 2b. The base portion 1 and the second base portion 1b are formed of densified ceramics, whereas the filter portion 2 is formed of porous ceramics. For this reason, the second ceramic green sheet 22 will have more pores (the porosity is larger) when sintered in the subsequent firing process, as compared to the first ceramic green sheet 12 and the third ceramic green sheet 12b. Specifically, the second ceramic green sheet 22 has more components which become pores when sintered in the firing process, as compared to the first ceramic green sheet 12 and the third ceramic green sheet 12b. Specifically, more organic binder components and a pore-forming material are included. Alternatively, in order to lower the sintering performance to increase the pores, sintering aid components are less included.

The use of a pore-forming material is desirable from the viewpoint of easiness in adjustment of pore diameter and porosity. The pore-forming material has the form of particles that will be burnt to vanish in the subsequent firing process. Examples of the pore-forming material include acrylic resin beads (methacrylic ester copolymer beads), carbon powder, and crystalline cellulose. The pore-forming material in use preferably has a particle size which is 1 to 1.2 times the pore diameter of the filter portion 2. As described previously, in the case of forming the filter portion 2 having pore diameters of 1 µm to 60 µm, it is possible to use a pore-forming material having an average particle size of 1 µm to 72 µm. Porosity adjustment is accomplished by adjusting the particle size and the amount of the pore-forming material.

In the case where the base portion 1 is formed of alumina ceramics, with respect to the first ceramic green sheet 12 and the third ceramic green sheet 12b, a slurry is prepared by admixing an organic binder such as acryl-based resin, an organic solvent such as toluene and acetone, and a solvent such as water in alumina powders and sintering aids (powders of SiO₂, MgO, CaO, etc.) The slurry may be formed into a sheet shape by a film formation method such as a doctor blade method. In the example of FIG. 15, thicknesses of the first ceramic green sheet 12 and the third ceramic green sheet 12b are different but may be the same. The first ceramic green sheet 12 and the third ceramic green sheet 12b have different sizes, and the third ceramic green sheet 12b is smaller in size than the first ceramic green sheet 12. For the second ceramic green sheet 22, a slurry in which the pore-forming material is added to the slurry for the first ceramic green sheet 12 is preferably prepared. The second ceramic green sheet 22 contains the pore-forming material, in addition to the material for the first ceramic green sheet 12. The second ceramic green sheet 22 is also smaller in size than the first ceramic green sheet 12. An aligned size of the second ceramic green sheet 22 and the third ceramic green sheet 12b is substantially the same as the first ceramic green sheet 12.

When the filter portions 2 have the different pore diameters, it is preferably to prepare a plurality of types of the second ceramic green sheets 22 having different average particle diameters of the pore-forming materials contained by using the pore-forming materials having different average particle diameters, as the pore-forming materials added to the slurry for the second ceramic green sheets 22, for example. When the filter portions 2 have the different porosities, it is preferable to prepare a plurality of types of the second ceramic green sheets 22 having different average particle diameters of the pore-forming material included by making amounts of the pore-forming materials which are added to the slurry for the second ceramic green sheets 22, different.

Then, as shown in FIG. 15(b), an electrode layer 32 is formed on the first ceramic green sheet 12. The electrode layer 32 will be the electrode 3 through sintering in the subsequent firing process. The electrode layer 32 is preferably formed by applying a metal paste having a metal material such as platinum or tungsten, which is a main component of the electrode 3, as a main component, onto the first ceramic green sheet 12. The metal paste may be prepared by adding a resin binder and a solvent to powders of the metal material and mixing the same. The metal paste is preferably applied in a wiring pattern shape of the electrode 3 by a screen printing method or otherwise. At this time, the electrode layer 32 is formed on only one surface of the first ceramic green sheet 12.

Also, as shown in FIG. 15(c), the second ceramic green sheet 22 is provided with through-holes 112. The through-hole 112 will be the flow channel 11. The second ceramic green sheet 22 is preferably provided with the through-holes 112 by punching processing of using a metallic die or laser processing.

Then, as shown in FIG. 15(d), the first ceramic green sheets 12 having the electrode layers 32 formed thereon, the second ceramic green sheets 22 having the through-holes 112 formed therein and the third ceramic green sheets 12b are laminated to form a laminated body 102. In the example of FIG. 15(d), the portions which become the three base portions 1 are respectively formed by laminating the two layers of the first ceramic green sheets 12, and the portions which become the filter portions 2 are formed by laminating the two layers of the second ceramic green sheets 22. All may be formed using one or three or more layers of the ceramic green sheets. Also, the second ceramic green sheets 22 and the third ceramic green sheets 12b are aligned so as to be in contact with each other in a planar direction, and the first ceramic green sheets 12 are laminated on the top and bottom thereof. A portion in which the first ceramic green sheets 12, the second ceramic green sheets 22 and the third ceramic green sheets 12b are laminated on one another is a portion 12a that will be the retaining portion 1a.

The example of FIG. 15(d) is the laminated body 102 corresponding to a case where the particulate matter measuring device component 100 having the electrodes 3 embedded in the base portion 1, like the example of FIG. 8, is manufactured. Therefore, the electrode layer 32 is positioned between the two layers of the first ceramic green sheets 12. The first ceramic green sheet 12 without the electrode layer 32 is laminated on the first ceramic green sheet 12 having the electrode layer 32 formed thereon.

When manufacturing the particulate matter measuring device component 100 as shown in the example of FIG. 2, the first ceramic green sheet 12 without the electrode layer 32 is laminated on the first ceramic green sheet 12 having the electrode layer 32 formed thereon, only a portion of the second ceramic green sheet 22 which portion will be the filter portion 2 is laminated thereon, and the first ceramic green sheet 12 having a frame shape is laminated so as to surround a periphery thereof.

In the above-described structure where the base portion 1 in contact with the filter portion 2 is provided as a sidewall outside (below) the filter portion 2 positioned at the bottom of the particulate matter measuring device component 100 as shown in the example of FIG. 8, the first ceramic green sheet 12 is preferably additionally bonded to a side surface of the laminated body 102 as shown in FIG. 15(d).

In order to form the laminated body 102, the first ceramic green sheets 12 having the electrode layers 32 formed thereon and the second ceramic green sheets 22 having the through-holes 112 formed therein are preferably overlapped and pressurized and integrated by a uniaxial press machine or the like.

By filling the through-holes 112 with resin or the like which will be burnt to vanish in the subsequent firing process, it is possible to suppress deformation in a part of the first ceramic green sheet 12 which part lies above or below the through-hole.

By firing the laminated body 102, there is obtained such a particulate matter measuring device component 100 as described hereinabove in which the ceramics-made densified base portion 1 and the porous ceramics-made filter portion 2 are formed integrally with each other. In the case where the base portion 1 and the filter portion 2 are formed of alumina ceramics, the firing temperature is set at 1500°C to 1600°C.

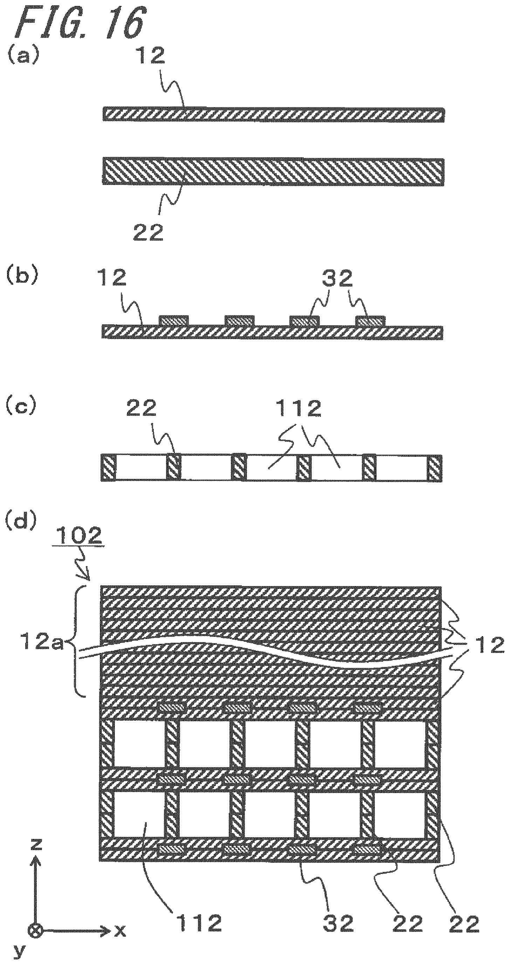

In order to manufacture the particulate matter measuring device component 100 as shown in the example FIG. 13, a manufacturing method as shown in FIG. 16 is preferably used. As compared to the manufacturing method of FIG. 15, in the example of FIG. 16, the third ceramic green sheet 12b which will be the second base portion 2b is not used, as shown in FIG. 16(a). Also, the first ceramic green sheet 12 and the second ceramic green sheet 22 have substantially the same size.

A process shown in FIG. 16(b) of forming the electrode layer 32 on the first ceramic green sheets 12 and a process shown in FIG. 16(c) of forming the through-holes 112 in the second ceramic green sheet 22 are respectively similar to the processes shown in FIG. 15(b) and FIG. 15(c). The process of firing the laminated body 102 is also similar.

In a process shown in FIG. 16(d) of forming the laminated body 102 by laminating the first ceramic green sheets 12 having the electrode layers 32 formed thereon and the second ceramic green sheets 22 having the through-holes 112 formed therein, a plurality of first ceramic green sheets 12 are additionally laminated on the uppermost first ceramic green sheet 12 having the electrode layer 32 formed thereon. A portion in which the plurality of first ceramic green sheets 12 are laminated is a portion 12a which will be the retaining portion 1a. The first ceramic green sheet 12 of the portion is preferably thicker than the first ceramic green sheet which is in contact with the second ceramic green sheet 22.

In the meantime, when the outermost second ceramic green sheet 22 in FIG. 16 is replaced with the first ceramic green sheet 12, the particulate matter measuring device component 100 as shown in the example of FIG. 2 can be manufactured. Preferably, the second ceramic green sheet 22 is slightly smaller than the first ceramic green sheet 12, and the first ceramic green sheet 12 having a frame shape is arranged to surround the second ceramic green sheet 22.

In order to form the through-conductor, before preparing the laminated body 102, a necessary ceramic green sheet is provided with through-holes by punching processing of using a metallic die or laser processing, and a conductive paste, which is similar to the paste for forming the electrode layer 32, is filled in the through-holes.

### Reference Signs List

1: Base portion
1a: Retaining portion
1b: Second base portion
11: Flow channel
12: Divided flow channel
2: Filter portion
3: Electrode
4: Sealing portion
100: Particulate matter measuring device component

## Claims

1. A particulate matter measuring device component, comprising:
a base portion formed of ceramics and having a flow channel through which a gas flows;
a filter portion formed of porous ceramics and disposed inside the flow channel so as to divide the flow channel into a plurality of divisions; and
a pair of electrodes for forming an electrostatic capacitance which is disposed in the base portion so as to sandwich at least a part of the filter portion,
the flow channel being located on one end side of the base portion, a retaining portion being disposed on the other end side of the base portion.

2. A particulate matter measuring device component, comprising:
a base portion formed of ceramics and having a flow channel through which a gas flows;
a filter portion formed of porous ceramics and disposed inside the flow channel so as to divide the flow channel into a plurality of divisions, and
a pair of electrodes for forming an electrostatic capacitance which is disposed in the base portion so as to sandwich at least a part of the filter portion,
the base portion having a height direction perpendicular to a length direction of the flow channel,
when the base portion is bisected in the height direction, the flow channel being on only one bisected side of the base portion.

3. A particulate matter measuring device component, comprising:
a pair of base portions which are plate-shaped members formed of ceramics, the pair of base portions being apposed so that main surfaces thereof face each other;
a filter portion formed of porous ceramics and disposed so as to divide a space between the pair of base portions to form a flow channel; and
a pair of electrodes for forming an electrostatic capacitance which is disposed in each of the pair of base portions so as to sandwich at least a part of the filter portion,
the flow channel being located on one end side of the pair of base portions, a retaining portion being disposed on the other end side of the pair of base portions.

4. The particulate matter measuring device component according to claim 3, wherein a second base portion formed of ceramics is disposed in part of the space which part is positioned on the other end side of the base portions.

5. The particulate matter measuring device component according to any one of claims 1 to 4, wherein the pair of electrodes is embedded in the base portion or the pair of base portions.

6. The particulate matter measuring device component according to any one of claims 1 to 5, wherein the base portion or the pair of base portions and the filter portion are formed integrally with each other.

7. The particulate matter measuring device component according to any one of claims 1 to 6, wherein the base portion or the pair of base portions and the filter portion are formed of a same ceramics.

8. The particulate matter measuring device component according to claim 7, wherein the base portion or the pair of base portions and the filter portion are formed of alumina.

9. The particulate matter measuring device component according to any one of claims 1 to 8, wherein the pair of electrodes has a linear wiring pattern and is disposed so as to extend along the filter portion.

10. The particulate matter measuring device component according to any one of claims 1 to 9, wherein the pair of electrodes has a linear wiring pattern and is disposed in a region of the base portion or the pair of base portions in which region the filter portion is sandwiched and in a region of the base portion or the pair of base portions in which region the filter portion is not sandwiched, and
as seen from above, a portion of the electrodes which portion is positioned in the region of the base portion or the pair of base portions in which region the filter portion is not sandwiched has a width narrower than a portion positioned in the region of the base portion or the pair of base portions in which the filter portion is sandwiched.

11. The particulate matter measuring device component according to any one of claims 1 to 10, wherein the filter portion comprises a plurality of filter portions having different pore diameters.

12. The particulate matter measuring device component according to any one of claims 1 to 10, wherein in a cross sectional view perpendicular to a length direction of the flow channel, a porosity of a filter portion positioned on an outer side is greater than a porosity of a filter portion positioned on an inner side.
